# EUROPÄISCHE PATENTSCHRIFT

(11) **EP 2 994 362 B1**
(45) Veröffentlichungstag und Bekanntmachung des Hinweises auf die Patenterteilung: **19.07.2017**
(21) Anmeldenummer: 14724350.5
(22) Anmeldetag: 30.04.2014
(51) Int. Cl.: B62D 5/04

(54) **ANFEDERUNGS-EXZENTERSCHWINGE IN CEPS-ANWENDUNG**
DAMPING ECCENTRIC MOTION LINK IN CEPS USAGE
BIELLE OSCILLANTE À EXCENTRIQUE DE SUSPENSION À RESSORT DANS UNE UTILISATION CEPS

(30) Priorität: 08.05.2013 DE 102013007883
(43) Veröffentlichungstag der Anmeldung: 16.03.2016
(73) Patentinhaber: ThyssenKrupp Presta AG, 9492 Eschen (LI)
(72) Erfinder: SCHÖNLECHNER, Johannes, A-6780 Schruns (AT); KOHLER, Christian, CH-8887 Mels (CH)
(74) Vertreter: thyssenkrupp Intellectual Property GmbH
(86) Internationale Anmeldenummer: PCT/EP2014/058877
(87) Internationale Veröffentlichungsnummer: WO 2014/180736

(56) Entgegenhaltungen:
- EP-A1- 2 497 975
- WO-A1-99/65758
- WO-A1-2006/105900
- WO-A1-2012/136315
- DE-A1-102007 019 324
- DE-A1-102009 016 187

## Beschreibung

Die vorliegende Erfindung betrifft eine elektromechanische Servolenkung mit den Merkmalen des Oberbegriffs des Anspruchs 1.

Eine gattungsgemäße elektromechanische Servolenkung weist einen elektrischen Servomotor auf, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind.

Aus der Offenlegungsschrift WO 2012/136315 ist eine Anordnung bekannt bei der die Lage der Schneckenwelle in Bezug auf das Schneckenrad einstellbar ist. Dabei erfolgt die Einstellung durch einen Aktuator oder eine Federvorspannung mittels einer Schwinge an der "motorfernen" Seite der Schneckenwelle, wohingegen die Lagerung der Schnecke motorseitig erfolgt. Die Einstellung der Lage der Schneckenwelle in Bezug auf das Schneckenrad erlaubt es, das im Betrieb beispielsweise durch Verschleiß entstandene Spiel zu korrigieren.

Es ist wünschenswert das Schneckenrad im eingebauten Zustand einzulaufen. Dazu muss die Schnecke wesentlich stärker vorgespannt werden, was aber nur bei motorseitiger Anbringung der Schwinge möglich ist.

Aus der EP 2 497 975 ist eine motorseitig montierte Andruckvorrichtung bekannt, bei der eine Torsionsfeder konzentrisch zur Schneckenachse liegt und die eine exzentrische Vorrichtung antreibt.

DE 10 2007 019 324 A1 offenbart eine elektromechanische Servolenkung mit den gattungsgemäß zugrunde gelegten Merkmalen. Dabei kann das Radialspiel am motornahen Ende der Schneckenwelle bei der Montage durch Drehung des Exzenterhebels relativ zum Getriebegehäuse eingestellt werden und bleibt im Betrieb fixiert. Im Betrieb auftretende Änderungen des Spiels werden nicht ausgeglichen.

Es ist deshalb Aufgabe der vorliegenden Erfindung, eine motorseitige Schwinge für eine Schneckenwellenlagerung in dem Getriebe einer elektromechanischen Servolenkung zu schaffen, bei der sowohl das Axialspiel als auch das Radialspiel selbsttätig einstellbar sind.

Diese Aufgabe wird von einer Vorrichtung mit den Merkmalen des Anspruchs 1 gelöst.

Weil bei einer elektromechanischen Servolenkung mit einem elektrischen Servomotor, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind, die Schneckenwelle ein freies motorfernes Ende aufweist, das in einem ersten Wälzlager gelagert ist, und die Schneckenwelle außerdem ein motornahes Ende aufweist, wobei das motornahe Ende der Schneckenwelle in einem zweiten Wälzlager gelagert ist, das in einem Exzenterhebel aufgenommen ist, der mittels eines Lagers schwenkbar an dem Getriebegehäuse befestigt ist, wobei das Lager einen von einer Schraubenfeder umgebenen Stift aufweist, wobei der Stift den Exzenterhebel schwenkbar am Gehäuse lagert, und wobei ein Haken der Schraubenfeder an einem Einschnitt des Exzenterhebels angreift und die Schwenkbewegung des Exzenterhebels vorspannt, kann ein eventuelles Radialspiel der Schneckenwelle gegenüber dem Schneckenrad noch wirksamer minimiert werden. Dabei ist vorzugsweise der Exzenterhebel mittels eines Lagers schwenkbar an dem Gehäuse befestigt.

Wenn weiter das Lager einen von einer Schraubenfeder umgebenen Stift aufweist, der den Exzenterhebel schwenkbar am Gehäuse lagert, und ein Haken der Schraubenfeder an einem Einschnitt des Exzenterhebels angreift und die Schwenkbewegung des Exzenterhebels vorspannt, kann eine kompakte Anordnung geschaffen werden. Vorteilhaft ist der Exzenterhebel mittels der Schraubenfeder derart vorgespannt, dass die Schneckenwelle) in Eingriff mit dem Schneckenrad gedrängt wird.

Die Schneckenwelle kann unabhängig von dem Elektromotor vorgespannt werden, wenn an der motornahen Seite des Exzenterhebels eine einen Achsversatz ausgleichende Kupplung angeordnet ist. Dabei kann vorteilhaft die Kupplung zwei ineinandergreifende Kupplungsteile aufweisen, die jeweils über eine Lagerbuchse mit der entsprechenden Welle drehfest verbunden sind. Insbesondere können die Kupplungsteile mit einem Achsversatz ausgleichenden Spiel ineinandergreifen.

Ein geräuscharmer und insbesondere spielfreier Lauf wird erzielt, wenn die Kupplung eine elastomere Dämpfung aufweist, die das Spiel der Kupplungsteile dämpft.

Es ist vorteilhaft, wenn die Lagerbuchsen innenliegend eine Schraubenfeder aufweisen, die die Schneckenwelle gegenüber dem Schneckenrad axial vorspannt.

Die Anordnung wird besonders kompakt, wenn das Wälzlager auf dem freien Ende der Schneckenwelle ein Nadellager ist.

Nachfolgend werden Ausführungsbeispiele der vorliegenden Erfindung anhand der Zeichnung beschrieben. Gleiche Bauteile oder Bauteile mit gleichen Funktionen tragen gleiche Bezugszeichen. Es zeigen:
- Figur 1:: das Getriebe einer gattungsgemäßen Servolenkung in einem Längsschnitt entlang der Schneckenwelle;
- Figur 2:: die gattungsgemäße Schneckenwelle mit ihrer Lagerung in einer perspektivischen Darstellung;
- Figur 3:: die gattungsgemäße Schneckenwelle aus Figur 2 mit einer Federvorspannung,
- Figur 4:: eine gattungsgemäße Darstellung entsprechend Figur 3, wobei der Drehpunkt des Exzenters außerhalb des Lagers der Schneckenwelle liegt,
- Figur 5:: eine räumliche Darstellung einer erfindungsgemäßen Lagerung mit Schneckenwelle,
- Figur 6:: eine Explosionszeichnung der erfindungsgemäßen Lagerung aus Figur 5 mit Schneckenwelle, Schneckenrad und Elektromotor,
- Figur 7:: eine Explosionszeichnung der erfindungsgemäßen Lagerung aus Figur 5 mit Schneckenwelle,
- Figur 8:: eine Explosionszeichnung der erfindungsgemäßen Lagerung aus Figur 5 mit Schneckenwelle, Schneckenrad, Elektromotor und zusammengesetzter Kupplung, sowie
- Figur 9:: eine Explosionszeichnung der erfindungsgemäßen Lagerung aus Figur 5 mit Schneckenwelle, Schneckenrad, Elektromotor und zusammengesetzter Kupplung in Ansicht von der Seite.

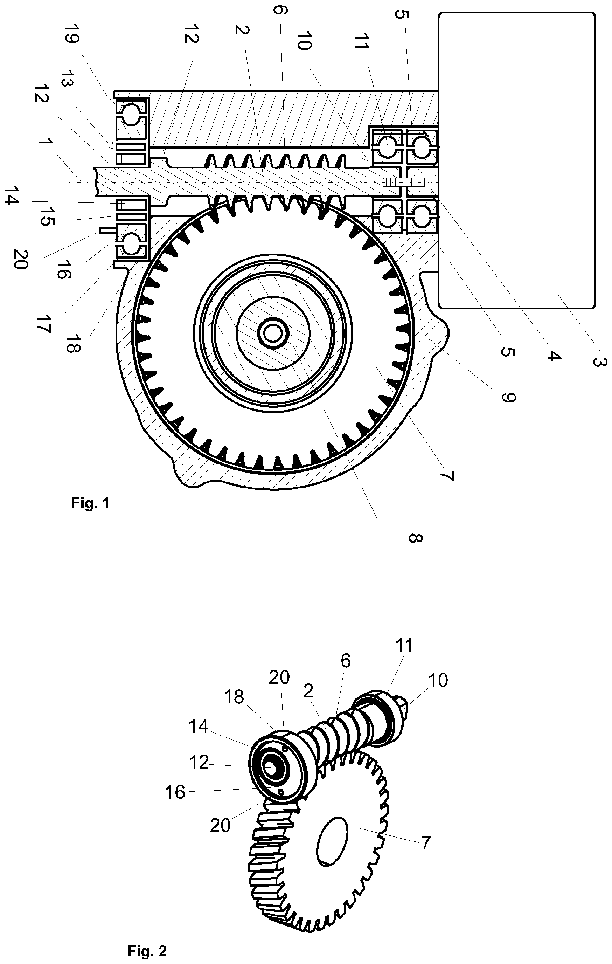

Die Figuren 1 bis 4 zeigen den Stand der Technik gemäß WO 2012/136315.

In der Figur 1 ist in einem Längsschnitt das Getriebe einer elektromechanischen Servolenkung dargestellt. Der Längsschnitt verläuft dabei entlang einer Drehachse 1 einer Schneckenwelle 2, die von einem Elektromotor 3 angetrieben ist. Der Elektromotor 3 verfügt über eine Motorwelle 4, die über eine flexible Kupplung 5 mit der Schneckenwelle 2 drehfest gekoppelt ist. Die Schneckenwelle 2 kämmt über eine Schneckenverzahnung 6 mit einem Schneckenrad 7. Das Schneckenrad 7 wiederum ist drehfest mit einer Lenkwelle 8 verbunden, die zwischen einem nicht dargestellten Lenkrad und dem eigentlichen Lenkgetriebe des Kraftfahrzeugs verläuft. Die genannten Bauelemente sind in einem gemeinsamen Getriebegehäuse 9 gelagert.

Die Lagerung der Schneckenwelle 2 in dem Gehäuse 9 erfolgt an einem motorseitigen Ende 10 der Schneckenwelle 2 in einem konventionellen Wälzlager 11, das als Kugellager ausgebildet ist. Das Kugellager 11 ist so ausgebildet, dass die Schneckenwelle 2 geringfügige Axialbewegungen und geringfügige Änderungen der Drehachse 1 gegenüber dem Gehäuse 9 ausführen kann. Die Schneckenwelle 2 weist weiter ein motorfernes Ende 12 auf, welches ebenfalls in einem Wälzlager 13 gelagert ist. Das Wälzlager 13 weist einen Innenring 14, Wälzkörper 15 und einen Zwischenring 16 auf. Der Zwischenring 16 ist wiederum selbst an seiner Außenseite mit einer Laufrille für Kugeln 17 versehen. Die Kugeln 17 laufen in einem Außenring 18, der schließlich in einem Lagersitz 19 des Gehäuses 9 befestigt ist. Der Zwischenring 16 ist schließlich mit einem Stift 20 versehen, der auf der dem Gehäuse 9 abgewandten Seite des Zwischenrings 16 befestigt ist. Der Zwischenring 16 ist so ausgebildet, dass an seiner Innenseite eine Lauffläche für die Wälzkörper 15 des inneren Lagers 13 ausgebildet ist. Diese Lauffläche ist im wesentlichen zylindrisch ausgebildet, da in diesem Ausführungsbeispiel die Wälzkörper 15 als Nadeln vorgesehen sind. An seiner äußeren Umfangsfläche ist der Zwischenring 16 mit einer Kugellauffläche für die außen laufenden Kugeln 17 versehen, wobei die äußere Lauffläche nicht konzentrisch mit der inneren Lauffläche angeordnet ist. Bei Drehung der Schneckenwelle 2 bedeutet dies, dass der Zwischenring 16 die Position der Drehachse 1 definiert, während das innere Wälzlager 13 die leichte und spielfreie Drehbarkeit der Schneckenwelle 2 gegenüber dem Zwischenring 16 bewirkt. Eine Drehung des Zwischenrings 16 hingegen bewirkt eine Verlagerung der Drehachse 1 der Schneckenwelle 2 und damit eine Veränderung des Eingriffs der Schnecke 6 in das Schneckenrad 7. Auf diese Weise kann insbesondere eine Zustellung der Schneckenwelle 2 auf das Schneckenrad 7 bewirkt werden, um einen spielfreien Verzahnungseingriff zu erreichen.

Bei dieser Anordnung ist der Zwischenring 16 gegenüber dem Gehäuse 9 über die Wälzkörper 17 ebenfalls wälzgelagert. Insbesondere bildet der Zwischenring 16 selbst einen Teil dieses äußeren Lagers, das aus dem Zwischenring 16, den Wälzkörpern 17 und dem Lageraußenring 18 gebildet ist. Diese Anordnung erlaubt eine sehr leichtgängige Verstellung des Zwischenrings 16, auch wenn dieser unter Last steht. Die Einstellung der Position der Schneckenwelle 2, genauer gesagt, der Drehachse 1 der Schneckenwelle 2 in Relation zu dem Schneckenrad 7 ist auf diese Weise besonders fein und reaktionsschnell möglich.

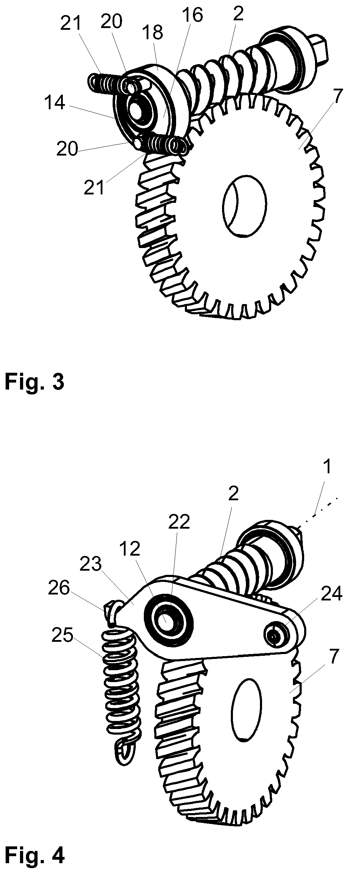

Die Figur 2 zeigt die Schneckenwelle mit den Wälzlagern sowie das mit der Schneckenwelle kämmende Schneckenrad 7 in einer perspektivischen Darstellung, wobei auf die Komponenten des Gehäuses und des Elektromotors verzichtet wurde. Der Zwischenring 16 ist hier mit zwei Betätigungselementen 20 versehen. Diese Betätigungselemente 20 können als Angriffspunkte für Federn zur elastischen Vorspannung dienen, wie dies nachfolgend zu Figur 3 beschrieben ist. Sie können auch als Angriffspunkte für einen elektrischen Aktuator dienen, der in Abhängigkeit von einer Steuerung oder Regelung den Zwischenring 16 betätigt.

In Figur 2 ist ersichtlich, dass die Drehachse der Schneckenwelle 2 konzentrisch zu dem Innenring 14 und zu der inneren Lauffläche des Zwischenrings 16 angeordnet ist, jedoch bezüglich der äußeren Lauffläche des Zwischenrings 16 und dem Außenring 18 exzentrisch liegt. Dem entsprechend bewirkt eine Drehung des Zwischenrings 16 eine Verlagerung der Drehachse 1 gegenüber dem Schneckenrad 7. Der Drehmittelpunkt des Zwischenrings 16, also der Punkt, um den der Zwischenring 16 gegenüber dem Gehäuse 9 drehbar ist, liegt mittig in dem Außenring 18. In Figur 2 ist erkennbar, dass dieser Drehpunkt innerhalb des inneren Wälzlagers 13 liegt, das aus dem Innenring 14, den Wälzkörpern 15 und der inneren Lauffläche des Zwischenrings 16 gebildet ist. Der räumliche Abstand zwischen diesen beiden Drehmittelpunkten kann als Exzentrizität des Zwischenrings 16 bezeichnet werden und diese Exzentrizität ist im vorliegenden Fall geringer als der Radius der inneren Lauffläche des Zwischenrings 16. Eine derart geringe Exzentrizität ist bei diesem Ausführungsbeispiel bevorzugt, da sie eine besonders feinfühlige Einstellung der Position der Schneckenwelle 2 erlaubt.

Die Figur 3 zeigt das Ausführungsbeispiel der Figur 2 mit zwei Schraubenfedern 21, die an den Betätigungselementen 20 angreifen. Die Betätigungselemente 20 sind hier als Stifte ausgebildet, die Achsparallel an der Stirnseite des Zwischenrings 16 angeordnet sind. Die Schraubenfedern 21 wirken auf Zug. Sie drängen den Zwischenring 16 bei dem Ausführungsbeispiel gemäß Figur 3 in eine Drehung entgegen dem Uhrzeigersinn. Da der Drehpunkt der Schneckenwelle 2 links neben dem Drehpunkt des Zwischenrings 16 liegt, wird die Schneckenwelle 2 durch die Federn gegen das Schneckenrad 7 gedrängt.

Die Figur 4 zeigt eine Anordnung, bei der die Schneckenwelle 2 an ihrem freien Ende 12 in einem konventionellen Wälzlager 22 drehbar gelagert ist. Das Wälzlager 22 sitzt mit seinem Außenring in einem Exzenterhebel 23, der einen entsprechenden Lagersitz aufweist. Der Exzenterhebel 23 ist in einer Schwenkachse 24 in dem Gehäuse 9 (hier nicht dargestellt) gelagert. Eine Schraubenfeder 25, die wiederum auf Zug wirkt, greift an einem hakenförmigen Ende 26 des Exzenterhebels 23 an, das der Schwenkachse 24 gegenüber liegt. Das Lager 22 ist zwischen der Schwenkachse 24 und dem Haken 26 angeordnet. Die Zugfeder 25 wirkt in der Figur 4 nach unten, sie zieht also den Exzenterhebel 23 und damit die Schneckenwelle 2 auf das Schneckenrad 7 zu. Auch auf diese Weise wird eine elastische Vorspannung der Schneckenwelle 2 gegen das Schneckenrad 7 erzielt. Wie in Figur 3 wird damit ein spielfreier Eingriff der Schneckenwelle 2 in das Schneckenrad 7 erreicht.

Im Unterschied zu den Ausführungen gemäß Figur 2 und Figur 3 wird bei der Ausführung gemäß Figur 4 das Lager 22 und damit die Drehachse der Schneckenwelle 2 auf einen erheblich größeren Radius bewegt, da die Schwenkachse 24 des Exzenterhebels 23 weiter von der Drehachse 1 der Schneckenwelle beabstandet ist als in den Figuren 2 und 3. Insbesondere ist hier die Exzentrizität, also der Abstand der Drehachse 1 von der Schwenkachse 24 zwischen dem einfachen und dem dreifachen Durchmesser des Wälzlagers 22 ausgewählt.

Im vorhergehenden Stand der Technik ist die Lage der Schneckenwelle 2 in Bezug auf das Schneckenrad 7 einstellbar. Die Einstellung erfolgt dabei auf der motorfernen Seite der Schneckenwelle.

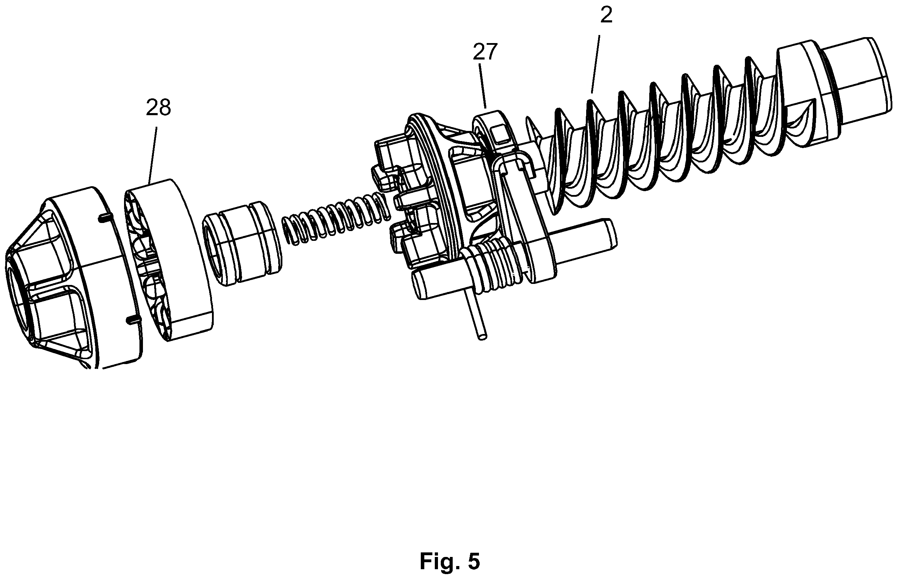

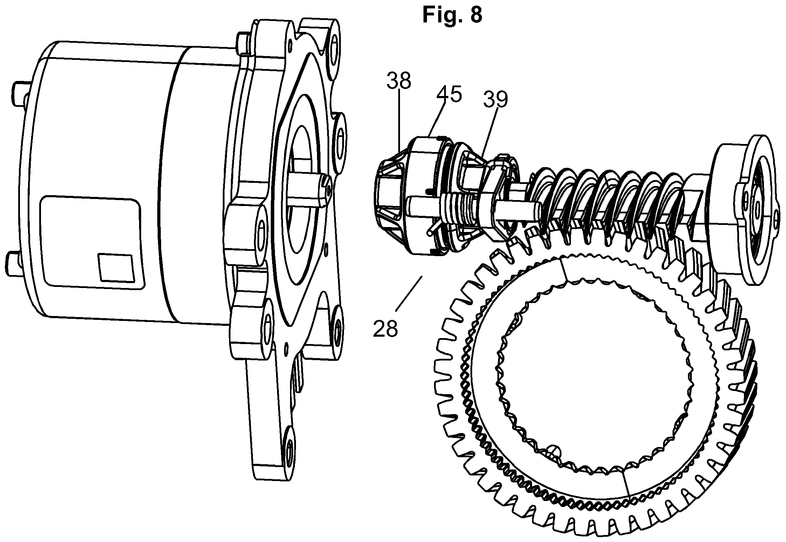

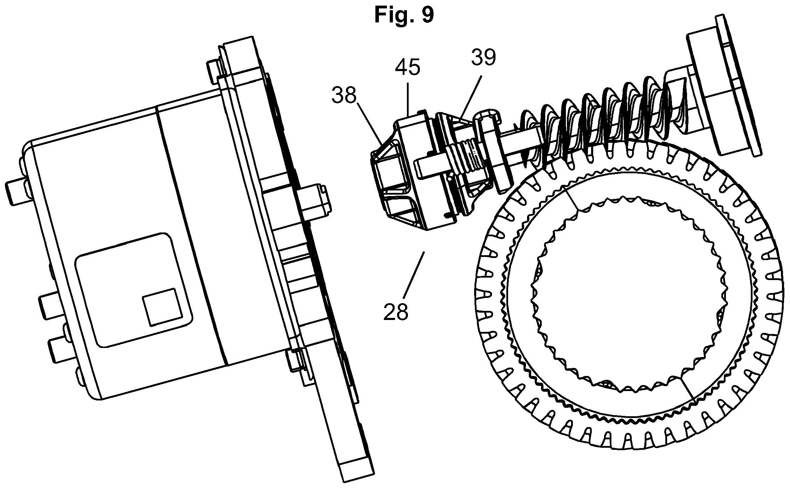

Die folgenden Figuren 5 bis 9 zeigen die erfindungsgemäße motorseitige Anordnung der Einstellungsvorrichtung.

Die räumliche Darstellung der Lagerung aus Fig. 5 zeigt eine auf der Schneckenwelle 2 motorseitige Anordnung eines federvorgespannten Exzenterhebels 27 und eine daran in motorseitige Richtung anschließende Achsversatz ausgleichende Kupplung 28 zwischen der Schneckenwelle 2 und der hier nicht dargestellten Motorwelle.

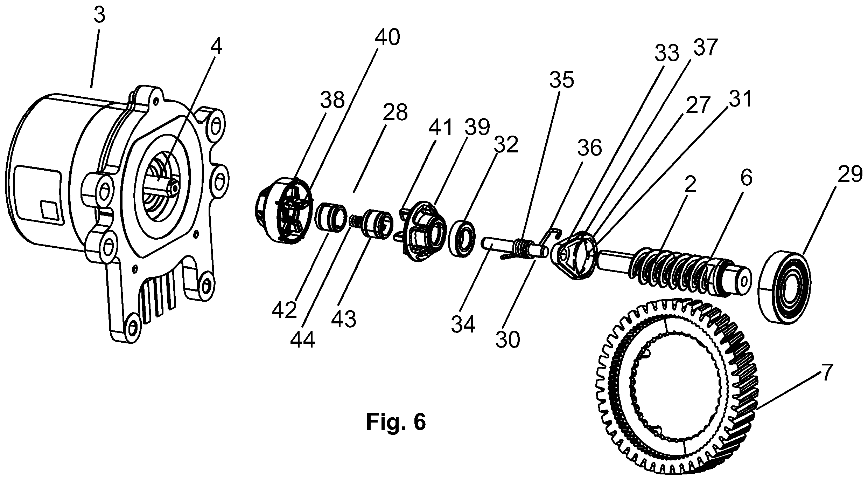

Fig. 6 zeigt die Einzelheiten der Lagerung in einer Explosionszeichnung.

Der Elektromotor 3 verfügt über die Motorwelle 4, die über eine flexible Kupplung 28 mit der Schneckenwelle 2 drehfest gekoppelt ist. Die Schneckenwelle 2 kämmt über die Schneckenverzahnung 6 mit dem Schneckenrad 7. Das Schneckenrad 7 wiederum ist drehfest mit einer nicht dargestellten Lenkwelle verbunden, die zwischen einem Lenkrad und dem eigentlichen Lenkgetriebe des Kraftfahrzeugs verläuft.

Auf der motorfernen Seite der Schneckenwelle 2 ist ein Wälzlager 29 vorgesehen, welches als Kugellager ausgebildet ist und geringfügige Axialbewegungen und geringfügige Änderungen der Drehachse der Schneckenwelle 2 gegenüber dem Gehäuse (hier nicht dargestellt) zulässt. Die Vorspannung zwischen der Schneckenwelle 2 und dem Schneckenrad 7 kommt durch den senkrecht zur Schneckenwelle 2 angeordneten, tropfenförmigen Exzenterhebel 27 zustande, der mittels eines Lagers 30 mit dem Gehäuse (hier nicht dargestellt) in Verbindung steht. Der Exzenterhebel 27 weist in einem kreisförmigen Bereich eine erste Öffnung 31 auf, die ein am motorseitigen Ende der Schneckenwelle 2 angeordnetes Wälzlager 32 aufnimmt. Das Wälzlager 32 lagert in Form eines Kugellagers die Schneckenwelle 2 drehbar und sitzt mit seinem Außenring in einem entsprechenden Lagersitz des Exzenterhebels 27. In einem zulaufenden Bereich des Exzenterhebels 27 ist eine zweite deutlich kleinere Öffnung 33 zur Aufnahme eines parallel zur Schneckenwelle 2 angeordneten Stifts 34 des Lagers 30 vorgesehen, wodurch der Exzenterhebel 27 schwenkbar um eine Schwenkachse am Gehäuse gelagert wird. Dabei umgibt eine Schraubenfeder 35, die auf Zug wirkt, den Stift 34 konzentrisch und greift mittels eines Hakens 36 an einem Einschnitt 37 des Exzenterhebels 27 an, der in etwa in der Ebene des Schneckenrads 7 liegt. Durch die Zugspannung der Schraubenfeder 35 wird der schwenkbar gelagerte Exzenterhebel 27 in seiner Bewegungsfreiheit eingeschränkt und eine elastische Vorspannung der Schneckenwelle 2 gegen das Schneckenrad 7 erzielt. Zur Motorseite schließt an die Schneckenwelle 2 und den Exzenterhebel 27 die Achsversatz ausgleichende Kupplung 28 an, welche die Schneckenwelle 2 mit der Motorwelle 4 drehfest verbindet. Derartige Kupplung sind als sogenannte "Oldhamkupplungen" bekannt. Die Kupplung 28 besteht aus zwei ineinandergreifenden Kupplungsteilen 38, 39 mit einem konzentrischen Lagersitz 40, 41, wobei der Eingriff der Kupplungsteile 38, 39 Spiel aufweist. Die Kupplungsteile 38, 39 sind durch jeweils eine in dem Lagersitz 40, 41 angeordnete zylindrische Lagerbuchse 42, 43 formschlüssig mit der entsprechenden Welle 4, 2 verbunden. Die Kupplungsteile 38, 39 sind dabei axial durch eine konzentrisch angeordnete Schraubenfeder 44 vorgespannt, die zwischen den Kupplungsteilen 38, 39 in den Lagerbuchsen 42, 43 angeordnet ist. Die gezeigte Kupplung 28 ist drehfest und durch das Spiel des Eingriffs der Kupplungsteile 38, 39 kann ein Achsversatz zwischen der Drehachse der Motorwelle 4 und der Drehachse der Schneckenwelle 2 ausgeglichen werden.

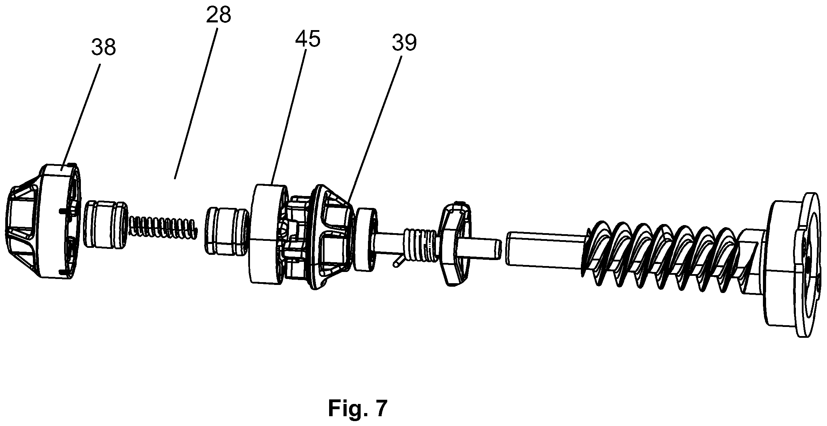

Figur 7, 8 und 9 zeigen die Ausführungsform der Figur 6 in unterschiedlichen Ansichten, wobei zusätzlich eine elastomere Dämpfung 45 der Kupplung 28 dargestellt ist, die das Spiel der ineinandergreifenden Kupplungsteile 38, 39 dämpft.

Durch den motorseitigen Exzenterhebel 27 und die Kupplung 28 wird eine Schneckenwellenlagerung geschaffen bei der sowohl das Axialspiel als auch das Radialspiel selbsttätig einstellbar sind.

### Bezugsziffern

- 1.: Drehachse
- 2.: Schneckenwelle
- 3.: Elektromotor
- 4.: Motorwelle
- 5.: Kupplung
- 6.: Schneckenverzahnung
- 7.: Schneckenrad
- 8.: Lenkwelle
- 9.: Getriebegehäuse
- 10.: Ende
- 11.: Wälzlager
- 12.: Ende
- 13.: Wälzlager
- 14.: Innenring
- 15.: Wälzkörper
- 16.: Zwischenring
- 17.: Kugeln
- 18.: Außenring
- 19.: Lagersitz
- 20.: Stift
- 21.: Schraubenfedern
- 22.: Wälzlager
- 23.: Exzenterhebel
- 24.: Schwenkachse
- 25.: Schraubenfeder
- 26.: Haken
- 27.: Exzenterhebel
- 28.: Kupplung
- 29.: Wälzlager
- 30.: Lager
- 31.: erste Öffnung
- 32.: Wälzlager
- 33.: zweite Öffnung
- 34.: Stift
- 35.: Schraubenfeder
- 36.: Haken
- 37.: Einschnitt
- 38.: Kupplungsteil
- 39.: Kupplungsteil
- 40.: Lagersitz
- 41.: Lagersitz
- 42.: Lagerbuchse
- 43.: Lagerbuchse
- 44.: Schraubenfeder
- 45.: Dämpfung

## Patentansprüche

1. Elektromechanische Servolenkung mit einem elektrischen Servomotor (1), der eine Schneckenwelle (2) antreibt, die mit einem auf einer Lenkwelle (8) angeordneten Schneckenrad (7) kämmt, wobei das Schneckenrad (7) mit einer Eingangswelle eines Lenkgetriebes in Wirkverbindung steht und wobei die Schneckenwelle (2) und die Lenkwelle (8) in einem gemeinsamen Getriebegehäuse (9) drehbar gelagert sind, wobei die Schneckenwelle (2) ein freies motorfernes Ende aufweist, das in einem ersten Wälzlager (29) gelagert ist, und die Schneckenwelle (2) ein motornahes Ende aufweist, wobei das motornahe Ende ein zweites Wälzlager (32) aufweist, welches in einem Exzenterhebel (27) aufgenommen ist, der mittels eines Lagers (30) schwenkbar an dem Getriebegehäuse (9) befestigt ist, **dadurch gekennzeichnet, dass** das Lager (30) einen von einer Schraubenfeder (35) umgebenen Stift (34) aufweist, wobei der Stift den Exzenterhebel (27) schwenkbar am Gehäuse lagert, und wobei ein Haken (36) der Schraubenfeder (35) an einem Einschnitt (37) des Exzenterhebels (27) angreift und die Schwenkbewegung des Exzenterhebels (27) vorspannt.

2. Servolenkung nach Anspruch 1, **dadurch gekennzeichnet, dass** der Exzenterhebel (27) mittels der Schraubenfeder (35) derart vorgespannt ist, dass die Schneckenwelle (2) in Eingriff mit dem Schneckenrad (7) gedrängt wird.

3. Servolenkung nach einem der vorhergehenden Ansprüche,
**dadurch gekennzeichnet, dass** an der motornahen Seite des Exzenterhebels (27) eine einen Achsversatz ausgleichende Kupplung (28) angeordnet ist.

4. Servolenkung nach Anspruch 3, **dadurch gekennzeichnet, dass** die Kupplung (28) zwei ineinandergreifende Kupplungsteile (38, 39) aufweist, die jeweils über eine Lagerbuchse (42, 43) mit der entsprechenden Welle drehfest verbunden sind.

5. Servolenkung nach Anspruch 4, **dadurch gekennzeichnet, dass** die Kupplungsteile (38, 39) mit einem Achsversatz ausgleichenden Spiel ineinandergreifen.

6. Servolenkung nach Anspruch 5, **dadurch gekennzeichnet, dass** die Kupplung eine elastomere Dämpfung (45) aufweist, die das Spiel der Kupplungsteile (38, 39) dämpft.

7. Servolenkung nach einem der vorhergehenden Ansprüche 4 bis 6,
**dadurch gekennzeichnet, dass** die Lagerbuchsen (42, 43) innenliegend eine Schraubenfeder (44) aufweisen, die die Schneckenwelle (2) gegenüber dem Schneckenrad (7) axial vorspannt.

## Claims

1. Electromechanical servo steering system having an electric servomotor (1) which drives a worm shaft (2) which meshes with a worm wheel (7) arranged on a steering shaft (8), wherein the worm wheel (7) is operatively connected to an input shaft of a steering gear mechanism, and wherein the worm shaft (2) and the steering shaft (8) are rotatably mounted in a common gear mechanism housing (9), wherein the worm shaft (2) has a free end which is remote from the motor and which is mounted in a first rolling bearing (29), and the worm shaft (2) has an end which is close to the motor, wherein the end which is close to the motor has a second rolling bearing (32) which is received in an eccentric lever (27) which is fastened pivotably to the gear mechanism housing (9) by means of a bearing (30), **characterized in that** the bearing (30) has a pin (34) surrounded by a helical spring (35), wherein the pin serves for the mounting of the eccentric lever (27) pivotably on the housing, and wherein a hook (36) of the helical spring (35) engages on a notch (37) of the eccentric lever (27) and preloads the pivoting movement of the eccentric lever (27).

2. Servo steering system according to Claim 1, **characterized in that** the eccentric lever (27) is preloaded by means of the helical spring (35) such that the worm shaft (2) is forced into engagement with the worm wheel (7).

3. Servo steering system according to one of the preceding claims, **characterized in that**, on that side of the eccentric lever (27) which is close to the motor, there is arranged a coupling (28) which compensates an axial offset.

4. Servo steering system according to Claim 3, **characterized in that** the coupling (28) has two coupling parts (38, 39) which engage into one another and which are in each case connected rotationally conjointly to the corresponding shaft by way of a bearing bushing (42, 43).

5. Servo steering system according to Claim 4, **characterized in that** the coupling parts (38, 39) engage into one another with a degree of play which compensates an axial offset.

6. Servo steering system according to Claim 5, **characterized in that** the coupling has an elastomer damping means (45) which dampens the play of the coupling parts (38, 39).

7. Servo steering system according to one of the preceding Claims 4 to 6, **characterized in that** the bearing bushings (42, 43) have, at the inside, a helical spring (44) which preloads the worm shaft (2) axially relative to the worm wheel (7).

## Revendications

1. Direction assistée électromécanique comprenant un servomoteur électrique (1) qui entraîne une vis sans fin (2) qui s'engrène avec une roue à denture hélicoïdale (7) disposée sur un arbre de direction (8), la roue à denture hélicoïdale (7) étant en liaison fonctionnelle avec un arbre d'entrée d'un mécanisme de direction et la vis sans fin (2) et l'arbre de direction (8) étant supportés de manière à pouvoir tourner dans un boîtier de transmission commun (9), la vis sans fin (2) présentant une extrémité libre éloignée du moteur, qui est supportée dans un premier palier à roulement (29), et la vis sans fin (2) présentant une extrémité proche du moteur, l'extrémité proche du moteur présentant un deuxième palier à roulement (32) qui est reçu dans un levier excentrique (27) qui est fixé au moyen d'un palier (30) de manière à pouvoir pivoter sur le boîtier de transmission (9), **caractérisée en ce que** le palier (30) présente une goupille (34) entourée par un ressort hélicoïdal (35), la goupille supportant le levier excentrique (27) de manière pivotante sur le boîtier, et un crochet (36) du ressort hélicoïdal (35) s'engageant sur une entaille (37) du levier excentrique (27) et sollicitant le mouvement de pivotement du levier excentrique (27).

2. Direction assistée selon la revendication 1, **caractérisée en ce que** le levier excentrique (27) est précontraint au moyen du ressort hélicoïdal (35) de telle sorte que la vis sans fin (2) soit poussée en engagement avec la roue à denture hélicoïdale (7).

3. Direction assistée selon l'une quelconque des revendications précédentes, **caractérisée en ce qu'**un accouplement (28) compensant un excentrage est disposé au niveau du côté proche du moteur du levier excentrique (27).

4. Direction assistée selon la revendication 3, **caractérisée en ce que** l'accouplement (28) présente deux parties d'accouplement (38, 39) s'engageant l'une dans l'autre, qui sont connectées de manière solidaire en rotation à l'arbre correspondant, à chaque fois par le biais d'une douille-palier (42, 43).

5. Direction assistée selon la revendication 4, **caractérisée en ce que** les parties d'accouplement (38, 39) s'engagent l'une dans l'autre avec un jeu compensant un excentrage.

6. Direction assistée selon la revendication 5, **caractérisée en ce que** l'accouplement présente un amortissement élastomère (45) qui amortit le jeu des parties d'accouplement (38, 39).

7. Direction assistée selon l'une quelconque des revendications précédentes 4 à 6, **caractérisée en ce que** les douilles-palier (42, 43) présentent à l'intérieur un ressort hélicoïdal (44) qui précontraint axialement la vis sans fin (2) par rapport à la roue à denture hélicoïdale (7).
